# EUROPÄISCHE PATENTSCHRIFT

(11) **EP 2 192 965 B1**
(45) Veröffentlichungstag und Bekanntmachung des Hinweises auf die Patenterteilung: **25.09.2019**
(21) Anmeldenummer: 08784659.8
(22) Anmeldetag: 09.07.2008
(51) Int. Cl.: B01D 29/96

(54) **FILTERVORRICHTUNG UND FILTERELEMENT**
FILTER DEVICE AND FILTER ELEMENT
DISPOSITIF DE FILTRATION ET ÉLÉMENT FILTRANT

(30) Priorität: 27.09.2007 DE 102007046208
(43) Veröffentlichungstag der Anmeldung: 09.06.2010
(73) Patentinhaber: Hydac Filtertechnik GmbH, 66273 Sulzbach/Saar (DE)
(72) Erfinder: SAKRASCHINSKY, Michael, 66386 St. Ingbert (DE); HENNES, Stefan, 66540 Hangard (DE)
(74) Vertreter: Bartels und Partner, Patentanwälte
(86) Internationale Anmeldenummer: PCT/EP2008/005572
(87) Internationale Veröffentlichungsnummer: WO 2009/043397

(56) Entgegenhaltungen:
- WO-A-2006/012031
- DE-A1- 4 328 772
- DE-U1-202005 007 871
- US-A1- 2003 127 384

## Beschreibung

Die Erfindung betrifft eine Filtervorrichtung mit einem Filterelement mit den Merkmalen im Oberbegriff von Anspruch 1.

Filtervorrichtungen zur Aufnahme von Filterelementen sind in einer Vielzahl von Ausführungsformen auf dem Markt frei erhältlich, vergleiche beispielsweise EP 1 287 871 A1 oder EP 0 891 214 B1. Ein nicht unbedeutender Anteil der Herstellungskosten entfällt bei derartigen Filtervorrichtungen auf die Ausbildung der Anschlusseinrichtung, die im Funktionszustand, bei dem der Filtrationsvorgang stattfinden kann, eine geeignete Verbindung zwischen Filterelement und der jeweils zugeordneten Fluidführung im Deckelteil herstellt. Die Anschlusseinrichtung muss einerseits so gestaltet sein, dass sich die Montagevorgänge für das Auswechseln von Filterelementen einfach und unkompliziert gestalten, dass andererseits jedoch eine sichere Abdichtung, selbst bei hohem Druckniveau, zustande kommt. Darüber hinaus ist die Anschlusseinrichtung möglichst so zu gestalten, dass beim Betrieb der Filtervorrichtung "Verwechslungssicherheit" besteht. Mit anderen Worten gesagt, ist eine Bauweise anzustreben, bei der angesichts der Vielzahl von Bauformen, in denen Filterelemente auf dem Markt sind, gewährleistet ist, dass lediglich bei Einsätzen solcher Filterelemente, die an das Gehäuse und das Deckelteil speziell angepaßt sind, der Funktionszustand erreichbar ist, so dass die Gefahr vermieden ist, dass versehentlich Filterelemente eines nicht vorgesehenen Typs mit ungeeigneten Filtereigenschaften in Betrieb genommen werden.

Die US 2003/0127384 A1 beschreibt eine gattungsgemäße Filtervorrichtung mit einem Filterelement, das in einem Gehäuse aufnehmbar ist, das mittels eines Deckelteiles, das Fluidführungen aufweist, verschließbar ist, wobei eine Anschlusseinrichtung zur Bildung einer fluidführenden Verbindung zwischen Filterelement und einer zugeordneten Fluidführung des Deckelteiles vorgesehen ist, wobei die Anschlusseinrichtung in der Art einer Kupplung mit einem bewegbaren Kupplungsteil ausgebildet ist, das im Funktionszustand die fluidführende Verbindung herstellt, wobei das Kupplungsteil axial bewegbar ist und im Funktionszustand durch Federvorspannung unter Bildung einer Abdichtung an einem feststehend angeordneten Kupplungsteil der Anschlusseinrichtung anliegt.

Weitere Filtervorrichtungen gehen aus der WO 2006/012031 A1, der DE 43 28 772 A1 und der DE 20 2005 007 871 U1 hervor.

Im Hinblick auf diese Problematik stellt sich die Erfindung die Aufgabe, eine Filtervorrichtung zur Verfügung zu stellen, bei der die Anschlusseinrichtung den zu stellenden Anforderungen in besonderem Maße gerecht wird.

Erfindungsgemäß ist diese Aufgabe durch eine Filtervorrichtung gelöst, die die Merkmale des Patentanspruches 1 in seiner Gesamtheit aufweist.

Demgemäß besteht eine Besonderheit der Erfindung darin, dass das bewegbare Kupplungsteil am Filterelement vorgesehen ist und das feststehende Kupplungsteil am Deckelteil vorgesehen und durch den Mündungsrand der zugeordneten Fluidführung gebildet ist.

Es ist ferner vorgesehen, dass die Anschlusseinrichtung durch eine Art Kupplung gebildet ist, wobei ein bewegliches Kupplungsteil im Funktionszustand der Vorrichtung die fluidführende Verbindung zwischen Filterelement und zugeordneter Fluidführung des Deckelteiles herstellt, d. h. im Funktionszustand eine Kupplungsposition einnimmt. Dadurch lässt sich nicht nur eine Fluidverbindung realisieren, die eine einwandfreie Abdichtung bildet, sondern es eröffnet sich auch die Möglichkeit, durch entsprechende konstruktive Gestaltung des Filtergehäuses, insbesondere dessen Deckelteiles, sicherzustellen, dass die Vorrichtung nur in den Funktionszustand gebracht werden kann, wenn ein Filterelement benutzt wird, bei dessen Einbau in das Gehäuse das bewegbare Kupplungsteil der Anschlusseinrichtung seine Funktions- oder Kupplungsposition einnehmen kann.

Die Anordnung ist so getroffen, dass das Kupplungsteil axial bewegbar ist und im Funktionszustand durch Federvorspannung unter Bildung einer Abdichtung an einem feststehend angeordneten Kupplungsteil der Anschlusseinrichtung anliegt. Dadurch eröffnet sich die besonders vorteilhafte Möglichkeit die Anschlusseinrichtung sozusagen "selbststeuernd" auszulegen, nämlich in der Weise, dass das Anbringen des Deckelteiles am Gehäuse unmittelbar zur federnden Anlage des axial bewegbaren Kupplungsteiles am zugeordneten, feststehenden Kupplungsteil führt.

Das bewegbare Kupplungsteil ist am Filterelement vorgesehen und das feststehende Kupplungsteil ist am Deckelteil vorgesehen und durch den Mündungsrand der zugeordneten Fluidführung gebildet. Das unmittelbare Zusammenwirken zwischen bewegbarem Kupplungsteil und Mündungsrand der Fluidführung führt zu einer besonders einfachen und kompakten Bauweise.

Das elementseitige, bewegbare Kupplungsteil kann in vorteilhafter Weise durch einen Hülsenkörper gebildet sein, der einen Fluiddurchgang von einem zur Längsachse koaxialen, von einem Filtermedium umgebenen Filterhohlraum her zur zugeordneten Fluidführung des Deckelteiles hin bildet.

Hierbei kann der Hülsenkörper außenumfangsseitig unter Bildung einer Abdichtung in einer mit einer Endkappe des Filterelementes verbundenen Führung verschiebbar geführt sein, so dass der Hülsenkörper sowohl die Kupplungsfunktion erfüllt als auch einen unmittelbaren Fluiddurchgang zwischen Fluidführung des Deckelteiles und dem inneren Filterhohlraum des Filterelementes bildet, der in üblicher Weise von einem rohrartigen, fluiddurchlässigen Stützkörper begrenzt ist, der wiederum von einem Filtermedium umgeben ist. Hierbei kann die Führung des Hülsenkörpers einen Fortsatz des der Endkappe benachbarten Endes des Stützkörpers bilden, so dass der Hülsenkörper einen koaxialen Fortsatz des Filterhohlraumes bildet.

In vorteilhafter Weise kann die Kupplung hierbei so ausgebildet sein, dass der das feststehende, deckelseitige Kupplungsteil bildende Mündungsrand der zugeordneten Fluidführung eine Dichtungsebene definiert, an die der Hülsenendrand des das bewegbare Kupplungsteil bildenden Hülsenkörpers zur Bildung einer Axialdichtung durch die Federvorspannung anpressbar ist, wodurch sich eine besonders kompakte Bauweise der Kupplung ergibt.

Bei solcher Gestaltung können am Mündungsrand der deckelseitigen Fluidführung und am Hülsenendrand des Hülsenkörpers miteinander zusammenwirkende Dichtkanten und/oder Dichtflächen die Axialdichtung bilden.

Bei besonders vorteilhaften Ausführungsbeispielen kann die Axialdichtung derart gestaltet sein, dass Hülsenendrand und Mündungsrand jeweils eine Ringfläche bilden, wobei die eine Ringfläche als eine durchgehende Radialebene und die jeweils andere Ringfläche als eine Radialebene mit einer aus dieser geringfügig vorstehenden Dichtkante gestaltet sind. Dies führt zu einer besonders guten Abdichtung, so dass Betriebssicherheit auch bei hohem Druckniveau gewährleistet ist.

In besonders vorteilhafter Weise kann die Anordnung hierbei so getroffen sein, dass die Dichtkante ringförmig am Außenumfang der einen Ringfläche so angeordnet ist, dass sie den Außenumfang der anderen Ringfläche als Zentrierelement einfasst. Dadurch ist sichergestellt, dass beim Anbringen des Deckelteiles eine äußerst präzise, fluchtende Ausrichtung der Kupplungsteile zustande kommt, selbst wenn Bauteile seitens des Filterelementes, wie Endkappe, Stützkörper und dergleichen, als Spritzformteile aus Kunststoffmaterial mit Toleranzen behaftet sind, da die an den Dichtflächen gebildete Zentrierung auch in einem solchen Fall die genaue Ausrichtung und damit die gewünschten Dichtungseigenschaften sicherstellt.

Nachstehend ist die Erfindung anhand von in der Zeichnung dargestellten Ausführungsbeispielen im Einzelnen erläutert. Es zeigen:
- Fig. 1: einen schematisch vereinfacht und gegenüber einer praktischen Ausführungsform in leicht verkleinertem Maßstab gezeichneten Längsschnitt eines Ausführungsbeispieles der erfindungsgemäßen Filtervorrichtung;
- Fig. 2: einen der Fig. 1 entsprechenden Längsschnitt, jedoch entsprechend der in Fig. 1 mit II-II angegebenen Schnittebene;
- Fig. 3: eine demgegenüber stark vergrößert gezeichnete Teilschnittdarstellung, die lediglich den Kopfteil von Fig. 2 zeigt; und
- Fig. 4: eine gegenüber Fig. 3 noch stärker vergrößerte, perspektivische, abgebrochen und aufgeschnitten gezeichnete Teillängsschnittdarstellung nur des in Fig. 3 gezeigten oberen Bereiches eines abgewandelten Ausführungsbeispieles der Filtervorrichtung.

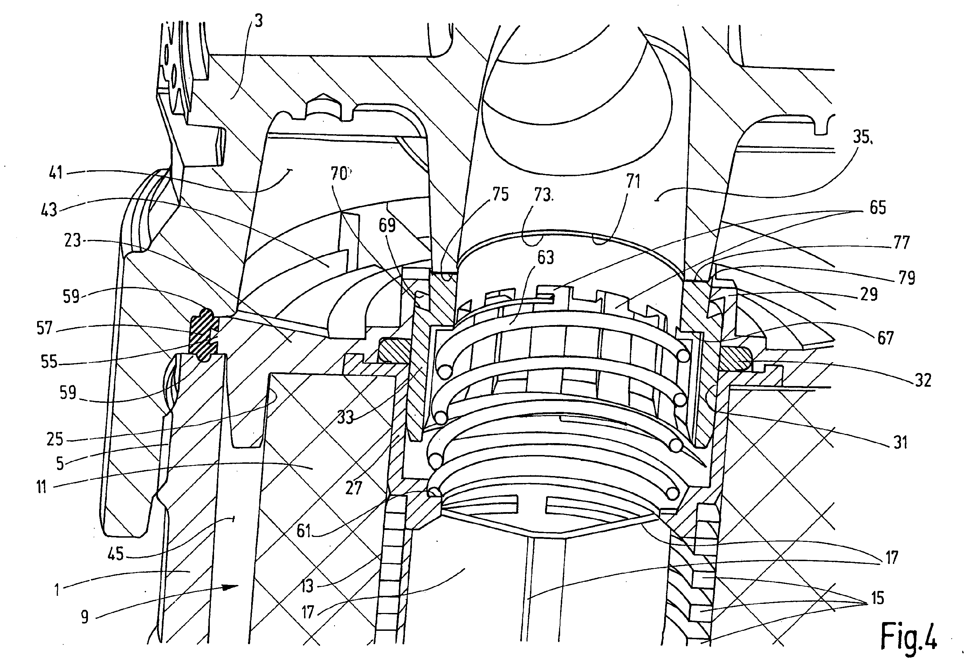

Ein topfartiges, am Boden geschlossenes, im großen Ganzen kreiszylinderförmiges Filtergehäuse 1 ist an seinem oberen Ende durch ein Deckelteil 3 verschließbar, das mit dem Gehäuse 1 über eine Verschraubung 5 lösbar verbindbar ist. Das Deckelteil 3 weist im Kopfbereich Taschen 7 als vorgegossene Bohrungsansätze für eine Verschmutzungsanzeige (nicht dargestellt) auf. Im Gehäuse 1 ist ein Filterelement 9 aufnehmbar, das in üblicher Bauweise ein hohlzylinderförmiges Filtermedium 11, beispielsweise in Form von Filtermattenlagen oder eines mehrlagigen, gefalteten oder plissierten Filterkörpers aufweist, das einen rohrförmigen Stützkörper 13 umgibt, der aus Kunststoffmaterial spritzgeformt ist. Dieser weist, wie am deutlichsten aus Fig. 4 ersichtlich ist, eine Aufeinanderfolge von im Abstand voneinander angeordneten, umfänglichen Kreisringen 15 auf, von denen in den Fig. lediglich einige beziffert sind und die in der bei derartigen Stützkörpern 13 üblichen Weise mit einem im Inneren befindlichen Träger verbunden sind, der als im Querschnitt dreiflügeliger Stern mit drei Flügeln 17 gestaltet ist. An dem dem Topfboden des Gehäuses 1 zugeordneten Ende ist das Filterelement 9 durch eine Bodenkappe 19 aus Kunststoffmaterial abgeschlossen, die eine Einfassung 21 für das Filtermedium 11 bildet. An dem entgegengesetzten Ende bildet eine ebenfalls aus Kunststoffmaterial geformte Endkappe 23 den dem Deckelteil 3 zugewandten Abschluss des Filterelementes 9, wobei die Endkappe 23 in ähnlicher Weise wie die Bodenkappe 19 eine Einfassung 25 für das betreffende Ende des Filtermediums 11 bildet.

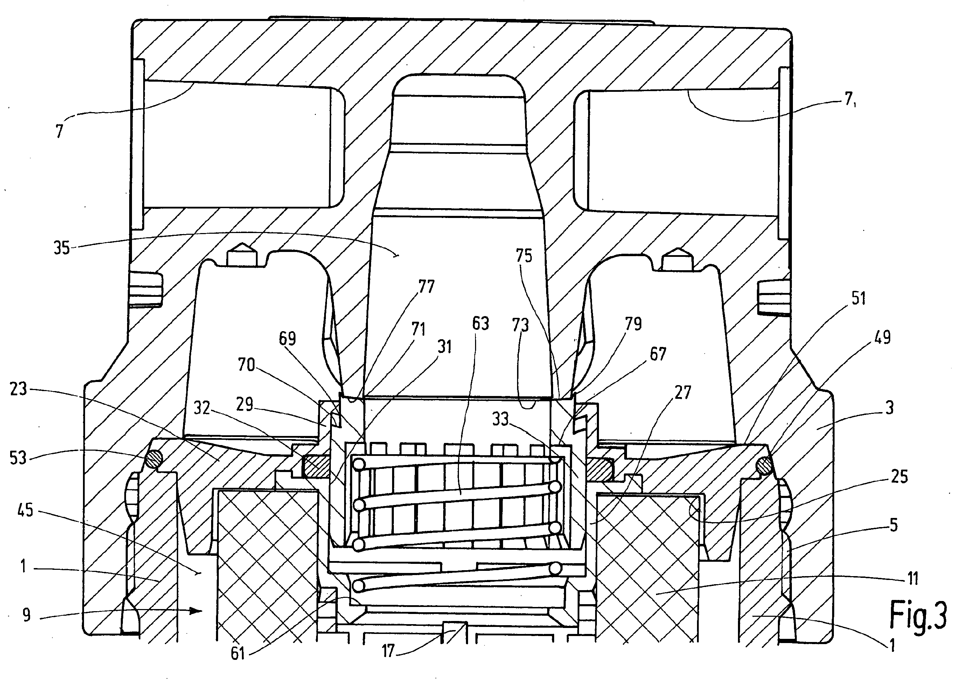

Wie am deutlichsten den Fig. 3 und 4 entnehmbar ist, befindet sich am radial innenliegenden Bereich der Einfassung 25 ein Hohlkörper 27, der zusammen mit einem Fortsatz 29, der am radial innenliegenden Ende der Endkappe 23 axial in Richtung auf das Deckelteil 3 hin vorsteht, eine kreiszylindrische Führung 31 bildet, in der ein Hülsenkörper 33 axial verschiebbar geführt ist, wobei zwischen dem Hohlkörper 27 und dem Fortsatz 29 ein Sitz für ein Dichtelement 32 gebildet ist, das den Hülsenkörper 33 gegenüber der Führung 31 abdichtet. Der Hülsenkörper 33 dient als bewegbares Kupplungsteil der Anschlusseinrichtung zur Herstellung einer Fluidverbindung zwischen Filterelement 9 und einer Fluidführung 35 im Deckelteil 3.

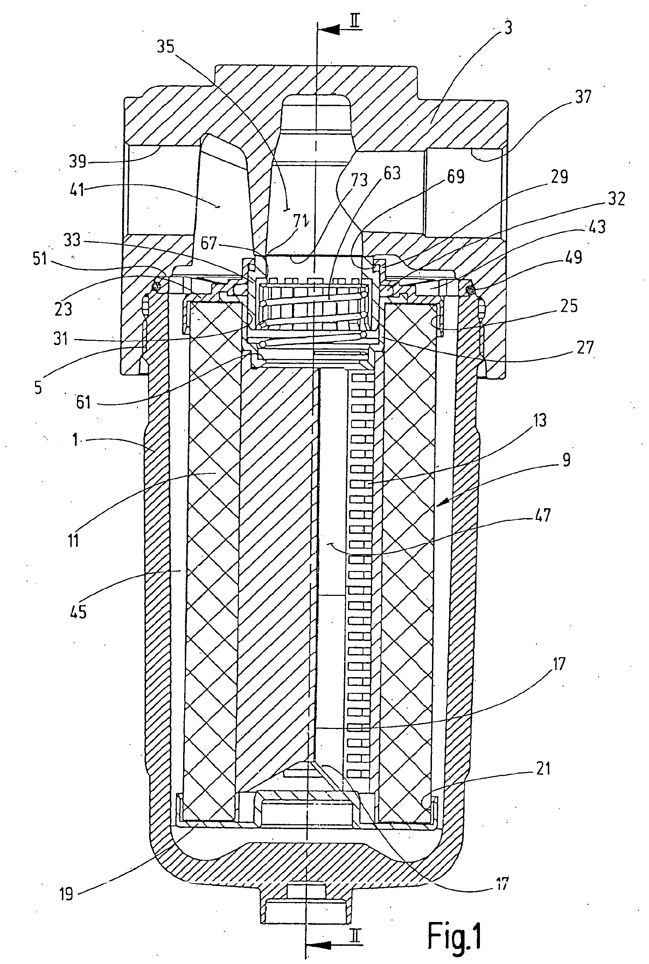

Wie aus Fig. 1 entnehmbar ist, ist die Fluidführung 35 im Deckelteil 3 mit einem Fluidauslass 37 für abgereinigtes Fluid in Verbindung. Ein im Deckelteil 3 hierzu gegenüberliegend angeordneter Fluideinlass 39 für abzureinigendes Fluid steht im Deckelteil 3 mit einer zweiten Fluidführung 41 in Verbindung, von der aus das abzureinigende Fluid über in der Endkappe 23 ausgebildete Einströmöffnungen 43 in den Ringraum 45 einströmbar ist, der an der Außenseite des Filtermediums 11 die Schmutzseite der Filtervorrichtung bildet, von wo aus das zu reinigende Fluid das Filtermedium 11 von außen nach innen passiert und zu dem die Reinseite bildenden inneren Filterhohlraum 47 gelangt. Aus dem inneren Filterhohlraum 47 gelangt das abgereinigte Fluid durch den das Kupplungsteil der Anschlusseinrichtung bildenden Hülsenkörper 33 hindurch zur Fluidführung 35 des Deckelteils 3 und damit zum Fluidauslass 37.

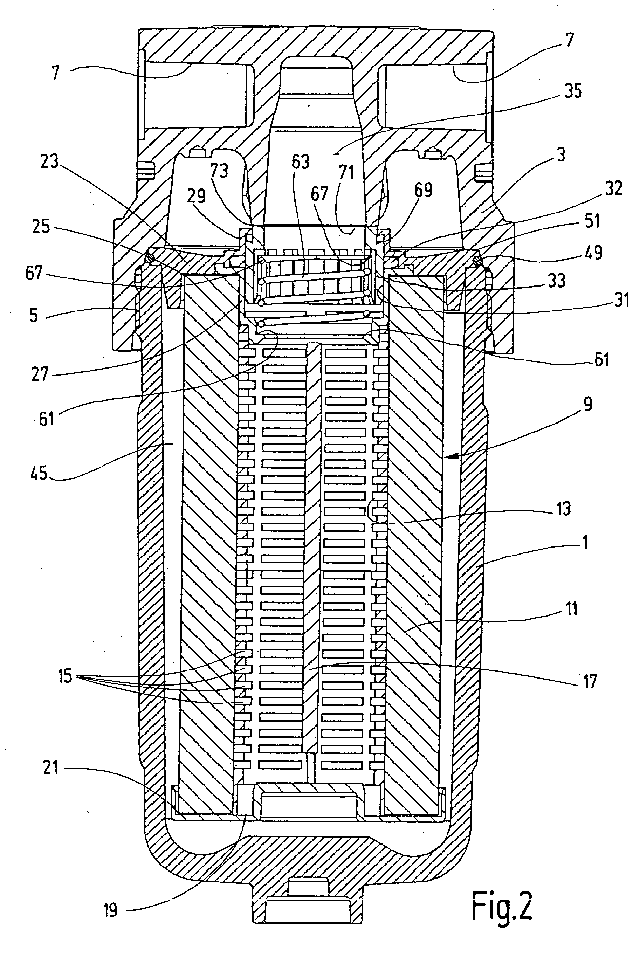

Die Endkappe 23, die außenumfangsseitig über eine Dichtungsanordnung 49 sowohl mit dem topfartigen Gehäuse 1 als auch mit dem Deckelteil 3 in Dichtverbindung ist, wird beim Aufschrauben des letzteren auf das Gehäuse 1 mittels eines Innenbundes 51 des Deckelteiles 3 gegen das Gehäuse 1 gedrückt. Während die Dichtungsanordnung bei dem Ausführungsbeispiel von Fig. 1 bis 3 durch eine Ringdichtung in der Art eines O-Ringes 53 ausgebildet ist, ist bei dem in Fig. 4 gezeigten Beispiel stattdessen am Außenumfang der Endkappe 23 ein schwalbenschwanzartig geformter Flanschring 55 ausgebildet, auf dem eine Profildichtung 57 gesichert ist, die zwei in Axialrichtung einander entgegengesetzte Lippen 59 aufweist, die je einen eigenen Abdichtbereich gegenüber dem Deckelteil 3 und gegenüber dem Gehäuse 1 bilden. Im Übrigen entspricht das Ausführungsbeispiel von Fig. 4 dem Ausführungsbeispiel gemäß Fig. 1 bis 3, so dass für die Beschreibung der Einzelheiten der Anschlusseinrichtung sowohl auf Fig. 1 bis 3 als auch auf Fig. 4 Bezug genommen werden kann.

Wie bereits erwähnt, ist als bewegliches Kupplungsteil der Hülsenkörper 33 innerhalb der Führung 31 axial verschiebbar geführt. Der Hohlkörper 27, der mit der Endkappe 23 verbunden ist und ein Teil der Führung 31 bildet, weist an seinem inneren Endbereich eine radial nach einwärts vorstehende Gestaltung auf, die eine Anschlagschulter 61 bildet, an der ein Ende einer Schrauben-Druckfeder 63 abgestützt ist, die sich im Inneren des Hülsenkörpers 33, an dessen Innenrippen 65 (lediglich in Fig. 4 einige beziffert) anliegend, mit ihrem anderen Ende an einer inneren Ringschulter 67 des Hülsenkörpers 33 abstützt. Dadurch ergibt sich für den Hülsenkörper 33 eine Federvorspannung für eine in Richtung auf das Deckelteil 3 verlaufende Axialbewegung. Zur Begrenzung dieser Bewegung in einer Endlage befindet sich an dem Fortsatz 29, der Teil der Führung 31 bildet, eine die Führung verengende Stufe 69, die mit einer Stufe 70 am Außenumfang des Hülsenkörpers 33 zur Endlagenbegrenzung zusammenwirkt. Sämtliche Fig., die den Funktionszustand der Filtervorrichtung darstellen, zeigen, dass bei aufgeschraubtem Deckelteil 3 der Hülsenkörper 33 aus der Endlage gegen die Federvorspannung der Druckfeder 63 axial in das Filterelement 9 hinein verschoben ist. Dies rührt davon her, dass der Mündungsrand 71 der deckelseitigen Fluidführung 35 als das feststehende Kupplungsteil der Anschlusseinrichtung zur Bildung der Kupplungsverbindung beim Festschrauben des Deckelteiles 3 auf den Hülsenendrand 73 des Hülsenkörpers 33 drückt und diesen aus der Endlage zurückschiebt, so dass die Federvorspannung der Druckfeder 63 als Dichtkraft zwischen Mündungsrand 71 der Fluidführung 35 und Hülsenendrand 73 des Hülsenkörpers 33 wirksam ist. Mit anderen Worten gesagt wird die Kupplungsverbindung der Anschlusseinrichtung selbsttätig hergestellt, wenn die Vorrichtung durch Aufschrauben des Deckelteiles 3 auf das ein zugehöriges Filterelement 9 enthaltendes Gehäuse 1 in den Funktionszustand gebracht wird.

Die miteinander zusammenwirkenden Bereiche von Hülsenkörper 33 und Fluidführung 35, die im Kupplungszustand die Dichtungsanordnung bilden, sind in der Weise gestaltet, dass eine der durch die Federvorspannung aneinander gepressten Ringflächen eine durchgehende Radialebene bildet, während die andere Ringfläche eine Radialebene mit aus dieser vorspringender Dichtkante bildet. Bei den vorliegenden Ausführungsbeispielen ist die Ringfläche 75 an der Fluidführung 35 durchgehend eben, während die Ringfläche 77 längs ihres Umfangsrandes eine geringfügig vorstehende Dichtkante 79 bildet. Diese bildet mit dem radial außen liegenden Rand der Ringfläche 75 nicht nur in Zusammenwirkung mit deren Flächenrand eine Abdichtung, sondern durch die Randeinfassung des Mündungsrandes 71 der Fluidführung 35 auch eine Zentrierung, durch die beim Aufschrauben des Deckelteiles 3 sichergestellt ist, dass eine äußerst präzise Fluchtung der Kupplungsverbindung der Anschlusseinrichtung zwangsweise erfolgt. In Anbetracht dessen, dass das Filterelement 9, von der Druckfeder 63 abgesehen, metallfrei aufgebaut sein kann, so dass mechanische oder thermische Einflüsse zu geringfügigen Verformungen führen könnten, stellt diese Zentrierung einen äußerst vorteilhaften Beitrag zur Betriebssicherheit der Vorrichtung dar.

## Patentansprüche

1. Filtervorrichtung mit einem Filterelement (9), das in einem Gehäuse (1) aufnehmbar ist, das mittels eines Deckelteiles (3), das Fluidführungen (35, 41) aufweist, verschließbar ist, wobei eine Anschlusseinrichtung zur Bildung einer fluidführenden Verbindung zwischen Filterelement (9) und einer zugeordneten Fluidführung (35) des Deckelteiles (3) vorgesehen ist, wobei die Anschlusseinrichtung in der Art einer Kupplung mit einem bewegbaren Kupplungsteil (33) ausgebildet ist, das im Funktionszustand die fluidführende Verbindung herstellt, wobei das Kupplungsteil axial bewegbar ist und im Funktionszustand durch Federvorspannung (63) unter Bildung einer Abdichtung an einem feststehend angeordneten Kupplungsteil (71) der Anschlusseinrichtung anliegt, **dadurch gekennzeichnet, dass** das bewegbare Kupplungsteil (33) am Filterelement (9) vorgesehen ist und das feststehende Kupplungsteil am Deckelteil (3) vorgesehen und durch den Mündungsrand (71) der zugeordneten Fluidführung (35) gebildet ist.

2. Filtervorrichtung nach Anspruch 1, **dadurch gekennzeichnet, dass** das elementseitige, bewegbare Kupplungsteil durch einen Hülsenkörper (33) gebildet ist, der einen Fluiddurchgang von einem zur Längsachse koaxialen, von einem Filtermedium (11) umgebenen Filterhohlraum (47) her zur zugeordneten Fluidführung (35) des Deckelteiles (3) hin bildet.

3. Filtervorrichtung nach Anspruch 2, **dadurch gekennzeichnet, dass** der Hülsenkörper (33) außenumfangsseitig unter Bildung einer Abdichtung (32) in einer mit einer Endkappe (23) des Filterelementes (9) verbundenen Führung (31) verschiebbar geführt ist.

4. Filtervorrichtung nach Anspruch 3, **dadurch gekennzeichnet, dass** der das feststehende, deckelseitige Kupplungsteil bildenden Mündungsrand (71) der zugeordneten Fluidführung (35) eine Dichtungsebene (77) definiert, an die der Hülsenendrand (73) des das bewegbare Kupplungsteil bildenden Hülsenkörpers (33) zur Bildung einer Axialdichtung durch die Federvorspannung anpressbar ist.

5. Filtervorrichtung nach Anspruch 4, **dadurch gekennzeichnet, dass** am Mündungsrand (71) der deckelseitigen Fluidführung (35) und am Hülsenendrand (73) des Hülsenkörpers (33) miteinander zusammenwirkende Dichtkanten (79) und/oder Dichtflächen (75, 77) die Axialdichtung bilden.

6. Filtervorrichtung nach Anspruch 5, **dadurch gekennzeichnet, dass** die Axialdichtung derart gestaltet ist, dass Hülsenendrand (73) und Mündungsrand (71) jeweils eine Ringfläche (75, 77) bilden, wobei eine Ringfläche (75) als eine durchgehende Radialebene und die jeweils andere Ringfläche (77) als eine Radialebene mit einer aus dieser geringfügig vorstehenden Dichtkante (79) gestaltet sind.

7. Filtervorrichtung nach Anspruch 6, **dadurch gekennzeichnet, dass** die Dichtkante (79) ringförmig am Außenumfang der einen Ringfläche (77) so angeordnet ist, dass sie den Außenumfang der anderen Ringfläche (75) als Zentrierelement einfasst.

8. Filtervorrichtung nach einem der Ansprüche 3 bis 7, **dadurch gekennzeichnet, dass** die Führung (31) des Hülsenkörpers (33) in der Endkappe (23) eine die Führung verengende Stufe (69) aufweist, die mit einer Stufe (70) am Außenumfang des Hülsenkörpers (33) dessen Bewegung in Richtung zum deckelseitigen Kupplungsteil hin gegen die Federvorspannung in einer Endlage begrenzt.

9. Filtervorrichtung nach Anspruch 8, **dadurch gekennzeichnet, dass** der Hülsenkörper (33) eine innere Ringschulter (67) aufweist, an der sich das eine Ende einer im Hülsenkörper (33) befindlichen Druckfeder (63) abstützt, deren anderes Ende an einer feststehenden Anschlagschulter (61) der Führung (31) abgestützt ist.

## Claims

1. Filter device with a filter element (9), which can be received in a housing (1), that can be closed by means of a cover part (3), which comprises fluid ducts (35, 41), wherein a connecting device is provided for forming a fluid-conducting connection between the filter element (9) and an associated fluid duct (35) of the cover part (3), wherein the connecting device is configured in the form of a coupling having a movable coupling part (33), which in the functional state creates the fluid-conducting connection, wherein the coupling part is movable axially and in the functional state is in contact, due to spring pre-tension (63), with a fixed arranged coupling part (71) of the connecting device, with the formation of a seal, **characterised in that** the movable coupling part (33) is provided at the filter element (9), and the fixed coupling part is provided at the cover part (3) and is formed by the mouth edge (71) of the associated fluid duct (35).

2. Filter device according to claim 1, **characterised in that** the element-side movable coupling part is formed by a sleeve body (33), which forms a fluid passage from a filter cavity (47), coaxial to the longitudinal axis and surrounded by a filter medium (11), to the fluid duct (35) associated with the cover part (3).

3. Filter device according to claim 2, **characterised in that** the sleeve body (33) is guided such as to be displaceable on the outer circumference side, with the formation of a seal (32) in a guide (31) connected to an end cap (23) of the filter element (9).

4. Filter device according to claim 3, **characterised in that** the mouth edge (71), forming the fixed cover-side coupling part of the associated fluid duct (35), defines a sealing plane (77), against which the sleeve end edge (73) of the sleeve body (33) forming the movable coupling part can be pressed in order to form an axial seal due to the spring pre-tension.

5. Filter device according to claim 4, **characterised in that** seal edges (79) and/or sealing surfaces (75, 77), interacting with one another at the mouth edge (71) of the cover-side fluid duct (35) and at the sleeve end edge (73) of the sleeve body (33), form the axial seal.

6. Filter device according to claim 5, **characterised in that** the axial seal is configured in such a way that the sleeve end edge (73) and mouth edge (71) in each case form a ring surface (75, 77), wherein one ring surface (75) is configured as a continuous radial plane and the other ring surface (77) in each case is configured as a radial plane with a slightly projecting sealing edge (79).

7. Filter device according to claim 6, **characterised in that** the sealing edge (79) is arranged in ring fashion at the outer circumference of the ring surface (77) in such a way that it encompasses the outer circumference of the other ring surface (75) as a centring element.

8. Filter device according to any one of claims 3 to 7, **characterised in that** the guide (31) of the sleeve body (33) in the end cap (23) comprises a step (69), narrowing the guide, which, with a step (70) at the outer circumference of the sleeve body (33), of which the movement in the direction towards the cover-side coupling part is delimited in an end position against the spring pre-tension.

9. Filter device according to claim 8, **characterised in that** the sleeve body (33) comprises an inner ring shoulder (67), at which is supported the one end of a pressure spring (63) which is located in sleeve body (33), the other end of which is supported at a fixed contact shoulder (61) of the guide (31).

## Revendications

1. Installation de filtration, comprenant un élément (9) de filtre, qui peut être reçu dans une enveloppe (1) pouvant être fermée au moyen d'une partie (3) formant couvercle, qui a des conduits (35, 41) pour du fluide, dans laquelle un dispositif de raccordement pour former une liaison fluidique est prévu entre l'élément (9) de filtre et un conduit (5) associé pour du fluide de la partie (3) formant couvercle, le dispositif de raccordement étant constitué à la manière d'un accouplement avec une partie (3) d'accouplement mobile, qui produit, dans l'état de fonctionnement, la liaison fluidique, la partie d'accouplement étant mobile axialement et s'appliquant à l'état de fonctionnement par une précontrainte (63) par ressort avec formation d'une étanchéité à une partie (71) d'accouplement fixe du dispositif de raccordement, **caractérisé en ce que** la partie (33) d'accouplement mobile est prévue sur l'élément (9) de filtre et la partie d'accouplement fixe est prévue sur la partie (3) formant couvercle et est formée par le bord (71) d'embouchure du conduit (35) associé pour du fluide.

2. Installation de filtration suivant la revendication 1, **caractérisée en ce que** la partie d'accouplement mobile du côté de l'élément est formée d'un corps (33) de manchon, qui forme un passage pour du fluide d'une cavité (47) de filtre, coaxiale à l'axe longitudinal et entourée d'un milieu (11) filtrant au conduit (35) associé pour du fluide de la partie (3) formant couvercle.

3. Installation de filtration suivant la revendication 2, **caractérisée en ce que** le corps (33) de manchon est guidé à coulissement du côté du pourtour extérieur avec formation d'une étanchéité (32) dans un guidage (31) relié à une coiffe (23) d'extrémité de l'élément (9) de filtre.

4. Installation de filtration suivant la revendication 3, **caractérisée en ce que** le bord (71) d'embouchure, formant la partie fixe d'accouplement du côté du couvercle, du conduit (35) associé pour du fluide, définit un plan (77) d'étanchéité où le bord (73) d'extrémité du corps (33) de manchon, formant la partie d'accouplement mobile, peut être pressé par la précontrainte à ressort pour former une étanchéité axiale.

5. Installation de filtration suivant la revendication 4, **caractérisée en ce que** des bords (79) d'étanchéité et/ou des surfaces (75, 77) d'étanchéité, coopérant sur le bord (71) d'embouchure du conduit (35) pour du fluide du côté du couvercle et sur le bord (73) d'extrémité du corps (33) du manchon, forment l'étanchéité axiale.

6. Installation de filtration suivant la revendication 5, **caractérisée en ce que** l'étanchéité axiale est conformée de manière à ce que le bord (73) d'extrémité du manchon et le bord (71) de l'embouchure forment chacun une surface (75, 77) annulaire, une surface (75) annulaire étant conformée en un plan radial continu et l'autre surface (77) annulaire en un plan radial ayant un bord (79) d'étanchéité légèrement en saillie de celui-ci.

7. Installation de filtration suivant la revendication 6, **caractérisée en ce que** le bord (79) d'étanchéité est disposé annulairement sur le pourtour extérieur de l'une des surfaces (77) annulaires, de manière à prendre, comme élément de centrage, le pourtour extérieur de l'autre surface (75) annulaire.

8. Installation de filtration suivant l'une des revendications 3 à 7, **caractérisée en ce que** le guidage (31) du corps (33) du manchon dans la coiffe (23) d'extrémité a un palier (69), qui rétrécit le guidage et qui délimite, en une position d'extrémité, avec un palier (70) du pourtour extérieur du corps (33) du manchon, son déplacement en direction de la partie d'accouplement du côté du couvercle à l'encontre de la précontrainte de ressort.

9. Installation de filtration suivant la revendication 8, **caractérisée en ce que** le corps (33) du manchon a un épaulement (67) annulaire intérieur où l'une des extrémités d'un ressort (63) de compression se trouvant dans le corps (33) du manchon s'appuie, tandis que l'autre extrémité est appuyée à un épaulement (61) de butée fixe du guidage (31).
